# EUROPÄISCHE PATENTSCHRIFT

(11) **EP 1 757 391 B1**
(45) Veröffentlichungstag und Bekanntmachung des Hinweises auf die Patenterteilung: **02.07.2008**
(21) Anmeldenummer: 06013888.0
(22) Anmeldetag: 05.07.2006
(51) Int. Cl.: B23B 31/30

(54) **Dehnspanneinrichtung**
Expansion chucking device
Dispositif de serrage extensible

(30) Priorität: 23.08.2005 DE 102005055622
(43) Veröffentlichungstag der Anmeldung: 28.02.2007
(73) Patentinhaber: Schunk GmbH & Co. KG Spann- und Greiftechnik, 74348 Lauffen (DE)
(72) Erfinder: Retzbach, Thomas, 74357 Bönnigheim (DE); Sigmund, Rainer, 74348 Lauffen (DE)
(74) Vertreter: Paul, Dieter-Alfred

(56) Entgegenhaltungen:
- EP-A1- 1 529 585
- JP-A- 11 104 931

## Beschreibung

Die vorliegende Erfindung betrifft eine Dehnspanneinrichtung mit einem Grundkörper, einer an einem axialen Endbereich des Grundkörpers vorgesehenen dünnwandigen Dehnbüchse, die eine zentrale Aufnahme für ein zu spannendes Bauteil bildet, und einem Spannring, welcher die Dehnbüchse unter Bildung einer dazwischen liegenden ringförmigen Druckkammer umgibt und mit dem Grundkörper verschraubt ist, wobei die Druckkammer mit einem Hydraulikmittel oder einem elastischen Feststoff gefüllt ist und die Dehnbüchse elastisch verformt werden kann, indem der Spannring unter Veränderung des Volumens der Druckkammer durch Verdrehung gegenüber dem Grundkörper axial verstellt wird.

Dehnspanneinrichtungen dieser Art sind beispielsweise aus der DE 195 25 574 C1 oder der EP 1 529 585 A1 bekannt und werden in der Praxis eingesetzt, um ein Werkzeug wie beispielsweise ein Fräs- oder Bohrwerkzeug an der Arbeitsspindel einer entsprechenden Werkzeugmaschine zu fixieren. Hierzu wird der Schaft des zu spannenden Werkzeugs in die Aufnahme des Dehnspannfutters eingesetzt und anschließend der Spannring unter Verkleinerung des Volumens der mit einem Hydraulikmittel oder einem elastischen Feststoff gefüllten Druckkammer auf die Dehnbüchse aufgeschraubt, so daß dieser durch den wachsenden Druck in der Druckkammer nach innen verformt wird und den Werkzeugschaft in der Aufnahme fixiert.

Die bekannten Dehnspanneinrichtungen haben sich in der Praxis durchaus bewährt. Die Bestrebungen gehen jedoch dahin, die Rundlaufgenauigkeiten weiter zu verbessern. Zu diesem Zweck ist es bekannt, Ausrichtvorrichtungen vorzusehen, über welchen die werkzeugspannende Seite eines Werkzeughalters gegenüber dem in der Arbeitsspindel einer Maschine eingespannten Teil elastisch verbogen werden kann.

Bei einem Werkzeughalter, der aus der US 5,286,042 bekannt ist, ist die werkzeugspannende Seite von der in der Arbeitsspindel einzuspannenden Seite durch einen ringförmigen Einstich getrennt und kann die werkzeugspannende Seite durch mehrere Schrauben, die axial in einen Flansch an der werkzeugspannenden Seite gegen einen Anschlag der eingespannten Seite eingeschraubt werden, verbogen werden.

Aus der EP 1 080 832 B1 ist ein weiteres Spannfutter bekannt, bei welchem die werkzeugspannende Seite von der in der Spindel eingespannten Seite durch eine Ringnut getrennt ist. Bei diesem Werkzeughalter ist ein Ring auf den Werkzeughalterschaft im Bereich der umlaufenden Ringnut angebracht. In diesem Ring sind gleichmäßig über den umfang verteilt Bohrungen vorgesehen, in welche Schraubenelemente eingeschraubt sind, welche auf eine schräge Fläche des Einstichs wirken, um die werkzeug- spannende Seite mit der Aufnahme zu verbiegen.

Aufgabe der Erfindung ist es, eine Dehnspanneinrichtung der eingangs genannten Art anzugeben, mit welcher Rundlaufungenauigkeiten mit geringem Aufwand ausgeglichen werden können.

Diese Aufgabe ist durch eine Dehnspanneinrichtung gemäß Anspruch 1 gelöst.

Rundlaufungenauigkeiten werden bei dem erfindungsgemäßen Spannfutter ausgeglichen, indem eine oder mehrere Stellschrauben bis zum Boden der entsprechenden Sackgewindebohrungen eingeschraubt und festgezogen werden. Beim Festziehen erzeugt das Anzugsmoment Reaktionskräfte, welche radial zur Schraubenachse wirken und die werkzeugspannende Seite des Spannrings von dem auf den Grundkörper aufgeschraubten Endabschnitt wegdrücken mit der Folge, daß das freie Ende des Spannrings sich verformt und damit ausgerichtet wird. Dieser Vorgang kann auf einem Voreinstellgerät oder an der Maschinenspindel erfolgen. Die erfindungsgemäße Dehnspanneinrichtung besitzt auch ohne den Einstellvorgang seine volle Funktion, da der Einstich die Steifigkeit und das Drehmoment nicht beeinflußt.

Gemäß einer bevorzugten Ausführungsform sind insgesamt vier Stellschrauben vorgesehen, die jeweils mit 90° Versatz gegeneinander in entsprechende Sackgewindebohrungen im Bereich des Einstichs eingeschraubt sind.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: im Längsschnitt eine erste Ausführungsform einer als Dehnspannfutter ausgebildeten Dehnspanneinrichtung gemäß der vorliegenden Erfindung in ihrem betätigten Zustand, und
- Figur 2: die Einzelheit X aus Figur 1 in vergrößerter Darstellung.

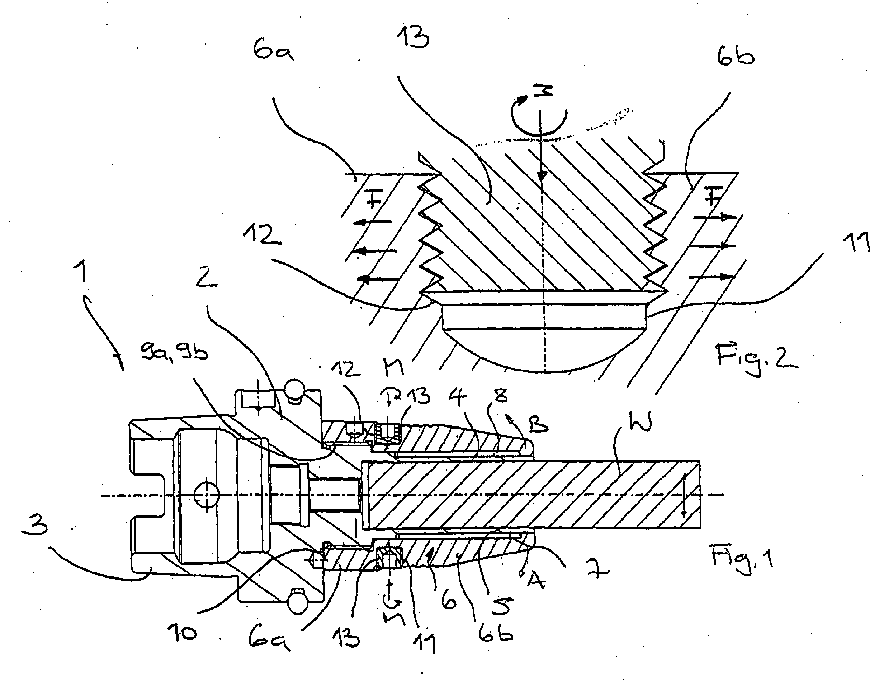

In der Figur 1 ist eine Ausführungsform eines als Steilkegelwerkzeughalter ausgebildeten Dehnspannfutters 1 gemäß der vorliegenden Erfindung im Längsschnitt dargestellt. Das Dehnspannfutter 1 umfaßt einen Grundkörper 2 aus einem formsteifen Material, der an seinem in der Zeichnung linksseitigen Endbereich in an sich bekannter weise einen Befestigungskonus 3 zur Einspannung an einer drehangetriebenen Arbeitsspindel einer Werkzeugmaschine aufweist. An dem anderen axialen Ende des Grundkörpers 2 ist eine dünnwandige Dehnbüchse 4 vorgesehen, die hier einteilig mit dem Grundkörper 2 ausgebildet ist, alternativ aber auch ein separates Bauteil sein kann, das mit dem Grundkörper 2 fest verbunden ist. Die Dehnbüchse 4 bildet eine zentrale Aufnahme 5, in die ein zylindrischer Schaft W eines Werkzeugs wie beispielsweise eines zu spannenden Bohrers oder Fräsers eingeschoben werden kann.

Die Dehnbüchse 4 ist von einem als Überwurfmutter ausgebildeten Spannring 6 umgeben, der an seinem zum Befestigungskonus 3 weisenden axialen Ende auf den Grundkörper 2 aufgeschraubt ist, wozu an dem Grundkörper 2 und an der Innenseite des Spannrings 6 entsprechende Gewindeabschnitte 9a, 9b ausgebildet sind. Die Dehnbüchse 4 und der Spannring 6 bilden zwischen sich eine ringförmige Druckkammer 7 mit einem konstanten Innen- und Außendurchmesser, die an ihrem und zum Befestigungskonus 3 weisenden axialen Ende durch einen Absatz 4a der Dehnbüchse 4 und an ihrem anderen axialen Ende durch eine Schulter 6a des Spannrings 6 begrenzt wird. Die Druckkammer 7 ist mit einem Hydraulikmittel oder einem elastischen Feststoffkörper 8 gefüllt.

Der Druck innerhalb der Druckkammer 7 läßt sich verändern, indem der Spannring 6 gegenüber dem Grundkörper 2 verdreht und auf diese Weise axial verstellt wird, so daß sich das Volumen der Druckkammer 7 verändert. Konkret ist die Anordnung so getroffen, daß in der in der Zeichnung nicht gezeigten rechten Endstellung des Spannrings 6 das Volumen der Druckkammer 7 so groß ist, daß das Hydraulikmittel in der Druckkammer 7 entspannt ist und der Werkzeugschaft W in die Aufnahme 5 eingesetzt werden kann. Wenn der Spannring 6 aus der rechten Endstellung auf den Grundkörper 2 aufgeschraubt wird, bis er die in Figur 1 dargestellte linke Endstellung erreicht, in welcher der Spannring 6 an einem Axialanschlag 10 des Grundkörpers 2 anliegt, wird die axiale Länge der Druckkammer 7 und damit deren Volumen kontinuierlich verkleinert. Dabei erhöht sich der Druck innerhalb der Druckkammer 7, so daß die dünnwandige Dehnbüchse 4 nach innen verformt wird, um das in die Aufnahme 5 eingesetzte Bauteil W zu spannen.

Der Spannring 6 der Dehnspanneinrichtung ist erfindungsgemäß durch einen an der Außenseite umlaufenden radialen Einstich 11 unterteilt in einen Abschnitt 6a, der auf den Futterkörper 1 aufgeschraubt ist, und einen Abschnitt 6b, welcher bei gespanntem Werkzeugschaft W die Druckkammer 7 begrenzt und aufgrund des umlaufenden Einstichs 11 gegenüber dem am Grundkörper 2 fixierten Endabschnitt 6a verbogen werden kann. Im Bereich des Einstichs 11 sind insgesamt vier um 90° gegeneinander versetzte Sackgewindebohrungen 12 vorgesehen, in welche Stellschrauben 13 eingeschraubt sind. Wie insbesondere die Figur 2 gut erkennen läßt, ist der Durchmesser der Sackgewindebohrungen 12 größer als die Breite des Einstichs 11, so daß die Stellschrauben 13 mit den den Einstich 11 begrenzenden Wandungen der axialen Abschnitte 6a, 6b des Spannrings 6 in Eingriff kommen. Die Stellschrauben 12 dienen dazu, den beweglichen Abschnitt 6b des Spannrings 6 elastisch zu verformen, indem eine oder mehrere Stellschrauben 13 bis zum Grund der entsprechenden Sackgewindebohrung 12 in den Spannring 6 eingeschraubt und dann festgezogen wird. Das Anzugsmoment M resultiert dann in Reaktionskräften F, welche, wie in der Figur 2 dargestellt ist, radial zur Achse der Stellschraube 13 und nach außen gerichtet sind, um den beweglichen Abschnitt 6b von dem festen Abschnitt 6a wegzudrücken. Wird beispielsweise die in der Figur 1 obere Stellschraube 13 festgezogen, führt dies dazu, daß der bewegliche Abschnitt 6b des Spannrings 6 in Richtung des Pfeils A nach unten verschwenkt wird, während ein Festziehen der unteren Stellschraube 13 bewirkt, daß der bewegliche Abschnitt 6b in der Pfeilrichtung B nach oben verschwenkt wird.

Die erfindungsgemäße Ausgestaltung hat den Vorteil, daß auch existierende Dehnspanneinrichtungen mit einer erfindungsgemäßen Rundlaufkorrekturfunktion versehen werden können, indem entweder der Spannring ausgetauscht oder in einen existierenden Spannring der Einstich mit den Sackgewindebohrungen eingebracht wird.

## Patentansprüche

1. Dehnspanneinrichtung mit einem Grundkörper (2), einer an einem axialen Endbereich des Grundkörpers (2) vorgesehenen dünnwandigen Dehnbüchse (4), die eine zentrale Aufnahme (5) für ein zu spannendes Bauteil bildet, und einem Spannring (6), welcher die Dehnbüchse (4) unter Bildung einer dazwischen liegenden ringförmigen Druckkammer (7) umgibt und mit dem Grundkörper (2) verschraubt ist, wobei die Druckkammer (7) mit einem Hydraulikmittel (11) oder einem elastischen Feststoff gefüllt ist und die Dehnbüchse (4) elastisch verformt werden kann, indem der Spannring (6) unter Veränderung des Volumens der Druckkammer (7) durch Verdrehung gegenüber dem Grundkörper (2) axial verstellt wird, **dadurch gekennzeichnet, daß** der Spannring (6) zwischen seinem mit dem Grundkörper (2) verschraubten Endabschnitt (6a) und seinem die Druckkammer (7) begrenzenden axialen Abschnitt (6b) einen Einstich (11) entlang seines Außenumfangs aufweist und zur Einstellung, der Rundlaufgenauigkeit Stellschrauben (13) in radiale Sackgewindebohrungen (12), die in dem Einstich (11) ausgebildet und gleichmäßig über den Umfang des Spannrings (6) verteilt sind, eingeschraubt sind.

2. Dehnspanneinrichtung nach Anspruch 1, **dadurch gekennzeichnet, daß** insgesamt vier Sackgewindebohrungen (12) mit einem Versatz von 90° gegeneinander in dem Spannring (6) vorgesehen sind.

## Claims

1. An expansion chucking device comprising a base (2), a thin-walled expansion sleeve (4) provided at an axial end region of the base (2) which forms a central seat (5) for a component to be chucked, and a chucking ring (6) which surrounds the expansion sleeve (4) thus forming an annular pressure chamber (7) lying between the latter, and which is screwed to the base (2), the pressure chamber (7) being filled with a hydraulic medium (11) or an elastic solid, and the expansion sleeve (4) being elastically deformable by the chucking ring (6) being shifted axially by changing the volume of the pressure chamber (7) by means of rotation in relation to the base (2), **characterised in that** between its end section (6a) screwed to the base (2) and its axial section (6b) defining the pressure chamber (7) the chucking ring (6) has a recess (11) along its outer periphery and that in order to set the rotation precision adjustment screws (13) are screwed into radial blind thread holes (12) which are formed in the recess (11) and are distributed evenly around the periphery of the chucking ring (6).

2. The expansion chucking device according to Claim 1, **characterised in that** a total of four blind thread holes (12), offset by 90° in relation to one another, are provided within the chucking ring (6).

## Revendications

1. Dispositif de serrage extensible avec un corps principal (2), une douille expansible à paroi mince (4) prévue à une zone axiale terminale du corps principal (2), qui constitue une logement centrale (5) pour l'élément à serrer, et une bague de serrage (6) qui entoure la douille expansible (4) sous formation d'une chambre hyperbare (7) intermédiaire annulaire et qui est visée au corps principal (2), la chambre hyperbare (7) étant remplie d'un agent hydraulique (11) ou bien d'un solide élastique et la douille expansible (4) pouvant être déformée élastiquement, et ceci par déplacement axial de la bague de serrage (6) sous torsion par rapport au corps principal (2) causé par diminution du volume dans la chambre hyperbare (7), **caractérisé en ce que** la bague de serrage (6) présente entre sa section terminale (6a), visée au corps principal (2), et sa section axiale (6b), délimitant la chambre hyperbare (7), une rainure (11) le long de son pourtour externe et pour l'ajustement de la précision de concentricité, des boulons de réglage (13), sont vissés dans des trous taraudés radiales (12) qui sont formés au niveau de la rainure (11) et dispersés de façon régulière sur le pourtour de la bague de serrage (6).

2. Dispositif de serrage extensible selon revendication 1, **caractérisé en ce que** quatre trous taraudés (12), décalés de 90° les uns par rapport aux autres, sont prévus au total au niveau de la bague de serrage (6).
